# EUROPEAN PATENT APPLICATION

(11) **EP 4 818 079 A1**
(43) Date of publication of application: **07.10.2026**
(21) Application number: 24917908.6
(22) Date of filing: 08.05.2024
(51) Int. Cl.: B65G 1/137, B65G 1/04

(54) **WAREHOUSING-BASED CONVEYING SYSTEM AND INTELLIGENT THREE-DIMENSIONAL WAREHOUSING SYSTEM**

(30) Priority: 17.01.2024 CN 202410071871
(71) Applicant: Libiao Robotics Holdings Pte. Ltd., 608521 Singapore (SG)
(72) Inventor: ZHU, Jianqiang, Hangzhou, Zhejiang 311199 (CN)
(74) Representative: Ottazzo, Marco Francesco Agostino
(86) International application number: PCT/CN2024/091578
(87) International publication number: WO 2025/152293

(57) **Abstract**

A warehousing-based conveying system and an intelligent three-dimensional warehousing system, which are applied to a three-dimensional warehouse. A plurality of columns of multi-tier warehousing racks (10) are provided in the three-dimensional warehouse, each warehousing rack (10) is provided with a plurality of tiers of reservation units (101), cargo containers (104) are placed in warehousing locations (103) of the reservation units (101), and a track conveying apparatus is mounted on the warehousing racks (10). The apparatus comprises a transverse track (11), a first stand column (12), a first movable member (13) and a connection mechanism (15) for a task module (14), wherein the transverse track (11) is arranged on the racks (10); the first stand column (12) is vertically arranged on the transverse track (11) and can transversely slide; the first movable member (13) is arranged on the first stand column (12) and can slide along the first stand column (12); the connection mechanism (15) for the task module (14) is arranged on the first movable member (13); and the task module (14) is driven by the first movable member (13) to perform storage and retrieval on a cargo container (104) and/or cargo (3), and put or take the cargo container and/or the cargo into or out of a docking component of a transport robot (105) operating at the bottom and/or the top of the warehousing rack (10).

## Description

### Cross-reference to Related Applications

This application claims priority to Chinese Patent Application No. 2024100718716, entitled "Warehousing-based conveying system and intelligent three-dimensional warehousing system", filed with the China National Intellectual Property Administration on January 17, 2024, the entire content of which is incorporated herein by reference.

### Technical Field

The present disclosure relates to the technical field of rapid picking, and in particular, to a warehouse-based conveying system (a warehouse-based transport system) and an intelligent three-dimensional (stereoscopic) warehousing system.

### Background Art

Modern logistics warehouses store goods in environments and perform fulfillment outbound operations based on logistics orders according to information such as stock keeping units (SKU), dates, and sequences.

In existing warehouses, the process from cargo storage to sorting requires goods to be moved out from warehouse racks by warehouse freight robots, and then the warehouse freight robots transport the goods to a sorting table or a sorting system. However, this traditional form of warehousing, transmission, and exchange occupies a large area, and the transmission efficiency is limited by the warehouse freight robots. Furthermore, it requires the participation of a specialized sorting system, resulting in extremely high time and configuration costs.

Therefore, existing warehouse and transport systems suffer from technical problems such as reduced warehouse inbound and outbound efficiency, insufficient space utilization, and high deployment costs.

### Summary

Embodiments of the present disclosure provide a warehouse-based transport system and an intelligent stereoscopic warehousing system, thereby achieving a significant improvement in the utilization rate of stereoscopic warehouses and the speed of goods inbound and outbound operations for existing warehousing systems, and effectively reducing deployment costs.

A warehouse-based transport system is applied to a stereoscopic warehouse. The stereoscopic warehouse is provided with multiple columns and tiers of warehouse racks. The warehouse racks are provided with multiple tiers of reservation units, and bins are placed in slots of the reservation units. A track transport device is mounted on the warehouse racks. The device includes:
- a transverse track, a first upright, a first movable member, and a connecting mechanism of a task module;
- the transverse track is disposed on the rack;
- the first upright is vertically disposed on the transverse track and capable of sliding transversely;
- the first movable member is disposed on the first upright and capable of sliding along the first upright;
- the connecting mechanism of the task module is disposed on the first movable member;
- the task module, driven by the first movable member, stores and/or retrieves bins and/or goods, and places them into a docking assembly of a bin robot running at the bottom and/or top of the warehouse rack, or retrieves them from the docking assembly;
- a space capable of providing a passage for a freight robot to travel is provided below the rack; and
- the task module of the track transport device is capable of extending out from the top of the stereoscopic warehouse.

Optionally, the track transport device is provided on fulfillment operating faces of the warehouse racks.

Optionally, a space capable of providing a passage for a freight robot to travel is arranged below the rack, which is specifically implemented as:
- removing partition plates of one or more slots on the bottom rack tier of the rack to provide a passage for the freight robot; or
- removing one or more rack tiers of the rack to provide a matching height to support the freight robot running on the ground.

Optionally, an opening is provided at the top of the stereoscopic warehouse, and the shape of the opening matches the task module to allow the task module to extend out to perform a fulfillment docking operation.

Optionally, the stereoscopic warehouse is arranged in a detachable manner or is a mobile stereoscopic warehouse.

Optionally, an opening is arranged at the top of the stereoscopic warehouse, which is specifically implemented as: the task module extends through the opening provided at the top of the stereoscopic warehouse, stores or retrieves bin(s) under the drive of the first movable member, and places them into the docking assembly of the freight robot running at the top of the warehouse rack at the opening.

Optionally, goods are placed into the docking assembly or docking bin of the freight robot running at the bottom of the rack by a goods picking device, or retrieved from the docking assembly or docking bin and placed into the bin; the arrangement of the goods picking device on the rack is specifically implemented as:
- a first transverse track, a first upright, a first movable member, and a connecting mechanism of a first task module;
- the first transverse track is disposed on the rack;
- the first upright is vertically disposed on the first transverse track and capable of sliding transversely;
- the first movable member is disposed on the first upright and capable of sliding along the first upright; and
- the connecting mechanism of the first task module is disposed on the first movable member.

Optionally, the system further includes: a second transverse track, which is located at a lower portion of the rack, wherein the two transverse tracks are connected to the first upright via a slider; and the slider moves on the transverse tracks driven by rollers and/or gears, wherein the rollers and/or gears are driven by a motor.

Optionally, the transport system further includes the arrangement of the track transport device on the rack, which further includes: a second upright and a second movable member, wherein the second upright is vertically disposed on the transverse track and capable of sliding transversely; the second movable member is disposed on the upright and capable of sliding along the second upright; and a connecting mechanism of a second task module is disposed on the second movable member.

Optionally, the arrangement of the track transport device on the rack further includes: a third upright, wherein the second task module is disposed between the second upright and the third upright via the connecting mechanism; the second task module is driven to be positioned at a goods position or a docking position on the rack.

Optionally, a synchronous belt wheel, driven by a motor and controlled via a reducer, drives a synchronous belt to support the movement of the first movable member on a slide track of the first upright; the synchronous belt wheel, driven by a motor and controlled via a reducer, drives a synchronous belt to support the movement of the second movable member on a slide track of the second upright.

Optionally, the transport system further includes: an identification module, and the identification module can be disposed on the goods picking device and/or the track transport device.

Optionally, the freight robot is a freight robot and/or a load handling device.

Optionally, a freight robot and/or a load handling device is provided at the top of the stereoscopic warehouse, wherein the load handling device is arranged in cooperation with a lifting device, the lifting device grabs the bin or goods. The load handling device is configured to move on the top of the stereoscopic warehouse and is configured to lift and move the bin or goods in the stereoscopic warehouse. The load handling device includes:
- electrical control equipment, a drive, and/or lifting assembly,
- a receiving space assembly for accommodating the bin or goods; and
- the lifting assembly is configured to lift and lower the lifting device relative to the receiving space assembly.

Optionally, a walking face for an autonomous guided vehicle (AGV) can be deployed at the top of the stereoscopic warehouse, and/or, a first set of parallel tracks and a second set of parallel tracks are arranged, wherein the second set of parallel tracks extends transversely to the first set on a substantially horizontal plane, forming a grid structure containing multiple grid spaces.

Optionally, the task module is a component capable of performing one or more tasks such as identification, extraction, returning, and grabbing; and the connecting mechanism of the task module is connected to different task modules.

Optionally, the freight robot is a warehouse robot, including: a mobile base, an upright vertically disposed on the mobile base, and a store/retrieve device disposed on the upright and capable of vertical lifting.

Optionally, the docking position is a position where the second task module transfers goods to the freight robot after storing and/or retrieving the bin and/or goods from the slot of the rack.

An intelligent stereoscopic warehousing system includes: one or more of the above-mentioned transport systems.

The warehouse-based transport system provided by the embodiments of the present disclosure can be arranged in an intelligent stereoscopic warehouse, a mobile stereoscopic warehouse (such as standard storage units like freight containers), or a customized stereoscopic warehouse for specific fields. The transport system is provided with a track transport device and transverse tracks for the movement of uprights. Through the configuration of the warehouse racks and the modification of the top and bottom rack tiers of the stereoscopic warehouse, a travel passage is provided for freight robots or sorting robots, fundamentally solving the problem of waste in existing stereoscopic warehousing systems. Meanwhile, the task module in the warehouse stores and/or retrieves bin(s) and/or goods under the drive of the first movable member and place them onto the docking assembly of the freight robot running at the top or bottom of the warehouse rack, enabling the cooperation between warehouse goods/bin and freight robots or sorting robots, making it possible to complete goods storage, goods/bin transfer, and goods/bin sorting in the stereoscopic warehouse. This achieves a significant improvement in the utilization rate of existing intelligent stereoscopic warehouses, the speed of goods inbound and outbound, and the sorting efficiency, thereby effectively reducing deployment costs.

### Brief Description of Drawings

In order to more clearly illustrate the specific embodiments of the present disclosure or the technical solutions in the prior art, the drawings required for the description of the specific embodiments or the prior art will be briefly introduced below. Obviously, the drawings described below are some embodiments of the present disclosure. For those of ordinary skill in the art, other drawings can be obtained based on these drawings without inventive efforts.
FIG. 1 is a schematic structural diagram of a rack in an embodiment of the present disclosure;
FIG. 2 is a schematic structural diagram of a freight robot in an embodiment of the present disclosure;
FIG. 3 is a schematic structural diagram of a warehouse-based transport system in an embodiment of the present disclosure;
FIG. 4 is a schematic structural diagram of a side view of a warehouse-based transport system in an embodiment of the present disclosure;
FIG. 5 is a schematic structural diagram of a track transport device of a transport system in an embodiment of the present disclosure;
FIG. 6 is a schematic structural diagram of a transport system in an embodiment of the present disclosure;
FIG. 7 is a schematic structural diagram of a track transport device of a warehouse-based transport system in an embodiment of the present disclosure;
FIG. 8 is a schematic structural diagram of a track transport device of a warehouse-based transport system in an embodiment of the present disclosure;
FIG. 9 is a schematic structural diagram of a track transport device of a warehouse-based transport system in an embodiment of the present disclosure;
FIG. 10 is a schematic partial structural diagram of a rack in a warehouse-based transport system in an embodiment of the present disclosure;
FIG. 11 is a schematic structural diagram of a goods picking device in an embodiment of the present disclosure;
FIG. 12 is a schematic structural diagram of a warehouse-based transport system in an embodiment of the present disclosure;
FIG. 13 is a schematic structural diagram of a warehouse-based transport system in an embodiment of the present disclosure;
FIG. 14 is a schematic structural diagram of a warehouse-based transport system in an embodiment of the present disclosure;
FIG. 15 is a schematic structural diagram of a warehouse-based transport system in an embodiment of the present disclosure; and
FIG. 16 is a schematic structural diagram of an intelligent stereoscopic warehouse transport system in an embodiment of the present disclosure.

### Detailed Description of Embodiments

To make the objectives, technical solutions, and advantages of the embodiments of the present disclosure clearer, the technical solutions in the embodiments of the present disclosure will be described clearly and completely below with reference to the drawings in the embodiments of the present disclosure. Obviously, the embodiments described are some, but not all, embodiments of the present disclosure. The components of the embodiments of the present disclosure described and shown in the drawings herein can usually be arranged and designed in various different configurations.

Therefore, the following detailed description of the embodiments of the present disclosure provided in the drawings is not intended to limit the scope of the present disclosure but merely represents selected embodiments of the present disclosure. Based on the embodiments of the present disclosure, all other embodiments obtained by those of ordinary skill in the art without inventive efforts shall fall within the protection scope of the present disclosure.

It should be noted that similar reference numerals and letters indicate similar items in the following drawings. Therefore, once an item is defined in one drawing, it does not need to be further defined and explained in the subsequent drawings.

In the description of the present disclosure, it should be noted that the terms "upper", "lower", "vertical", "horizontal", "in", "out", and the like indicate orientation or positional relationships based on the orientation or positional relationships shown in the drawings, or are the orientation or positional relationships that the product of the present disclosure is accustomed to when in use, and are merely for the convenience of describing the present disclosure and simplifying the description, rather than indicating or implying that the referred device or element must have a specific orientation, be constructed and operated in a specific orientation, and therefore cannot be understood as a limitation of the present disclosure. In addition, the terms "first", "second", "third", and the like are only configured to distinguish descriptions, and cannot be understood as indicating or implying relative importance.

In addition, terms such as "horizontal" and "vertical" do not require the components to be absolutely horizontal or suspended but may be slightly inclined. For example, "horizontal" merely means that its direction is more horizontal relative to "vertical" and does not mean that the structure must be completely horizontal, but may be slightly inclined.

In the description of the present disclosure, it should also be noted that unless otherwise explicitly specified and limited, the terms "arrange", "mount", and "connect" should be understood in a broad sense. For example, they may be fixed connections, detachable connections, or integrated connections; they may be mechanical connections or electrical connections; they may be direct connections or indirect connections through an intermediate medium; and they may be the communication between the interiors of two elements. For those of ordinary skill in the art, the specific meanings of the above terms in the present disclosure can be understood according to specific situations.

The embodiments of the present disclosure provide a warehouse-based transport system, which achieves a significant improvement in the utilization rate of stereoscopic warehouses and the speed of goods inbound and outbound operations for existing warehousing systems, and effectively reduces deployment costs.

The embodiments of the present disclosure will be described in detail below with reference to the drawings. In the absence of conflict, the following embodiments and features in the embodiments can be combined with each other.

For clarity and convenience of description, the warehouse-based transport system involved in this specification includes at least: warehouse racks and a plurality of freight robots.

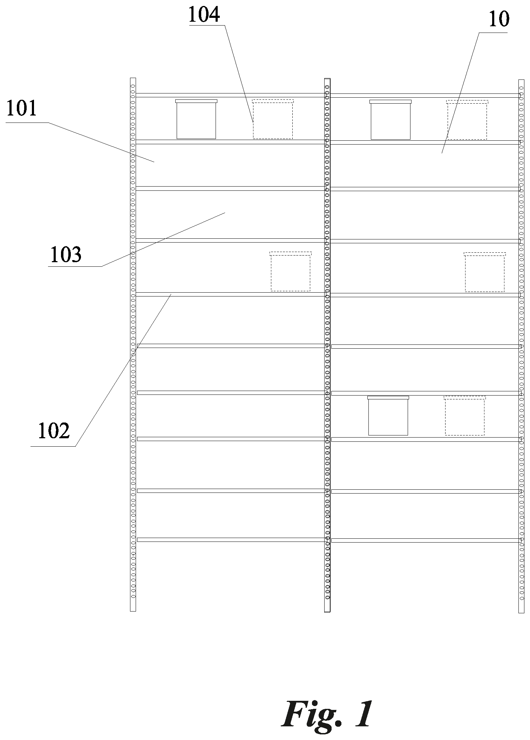

FIG. 1 shows a structural diagram of a warehouse rack. A rack 10 is configured for storage. The rack 10 is provided with multiple tiers of reservation units 101, and bins 104 are placed in slots 103 of the reservation units 101. The rack is horizontally provided with partition plates 102 to provide support for the bins 104.

It should be noted that general racks are assembled from uprights, beams, and tier plates. An independent group consists of two uprights and several beams (tier plates). If several groups are assembled into an upright, then except for the first group which requires two uprights, the others can share one upright with the group preceding it. This saves space and reduces costs. For example, two independent single-group racks require four uprights, but if they are arranged in an upright, only three uprights are needed. The second group of racks is attached to the first group of racks, so it is called an attached rack (or sub-rack).

It should be noted that: the stereoscopic warehouse can be a standard warehouse, a dense stereoscopic warehouse, a high-meter stereoscopic warehouse, a customized stereoscopic warehouse, or a container unit. The stereoscopic warehouse can be arranged in a detachable manner or be a mobile stereoscopic warehouse. When the stereoscopic warehouses are continuously spliced, the stereoscopic warehouse expands into a movable storage transfer and sorting plant.

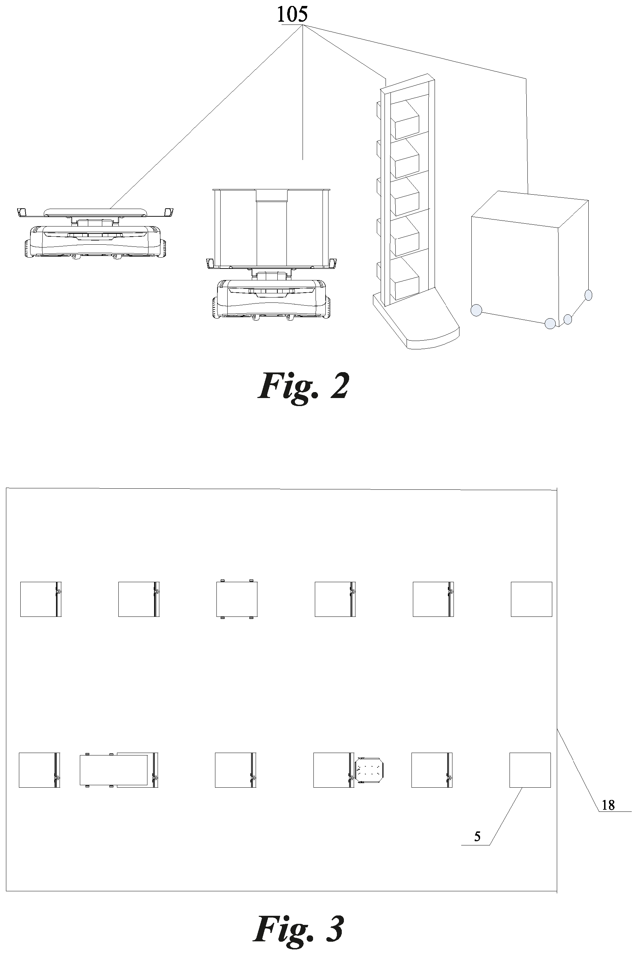

Referring to FIG. 2, a plurality of freight robots 105 can dock bins and/or goods.

As an achievable embodiment, the freight robot can be an automated guided vehicle (AGV), which is usually referred to as an AGV; or an autonomous mobile robot (AMR). The specific form is not limited, and reference may be made to the illustration in FIG. 2.

A freight robot and/or a load handling device is provided at the top of the stereoscopic warehouse. The load handling device is arranged in cooperation with a lifting device. The lifting device grabs the bin or goods. The load handling device is arranged to move on the top of the stereoscopic warehouse and is configured to lift and move the bin or goods in the stereoscopic warehouse. The load handling device includes:
- electrical control equipment, a drive and/or a lifting assembly, and
- a receiving space assembly for accommodating the bin or goods;
- the lifting assembly is configured to lift and lower the lifting device relative to the receiving space assembly.

A walking face for autonomous guided vehicle (AGV) can be deployed at the top of the stereoscopic warehouse, and/or a first set of parallel tracks and a second set of parallel tracks are arranged. The second set of parallel tracks extend transversely to the first set on a substantially horizontal plane, forming a grid structure containing multiple grid spaces.

In addition, the freight robot is a warehouse robot, including: a mobile base, a vertical frame vertically disposed on the mobile base, and a store/retrieve device disposed on the vertical frame and capable of vertical lifting, that is, a movable cargo robot with a high vertical frame.

Referring to FIGS. 3-4, an opening 5 is provided at the top 18 of the stereoscopic warehouse. Alternatively, in order to deploy a walking face for the freight robot 105 at the top of the stereoscopic warehouse, and/or to arrange a first set of parallel tracks and a second set of parallel tracks (wherein the second set of parallel tracks extends transversely to the first set on a substantially horizontal plane, forming a grid structure containing multiple grid spaces), the opening 5 provided at the top of the stereoscopic warehouse can be a grid unit in the grid structure. The walking face is referred to as a warehouse upper platform, and the specific form of the walking face is not limited to the embodiment.

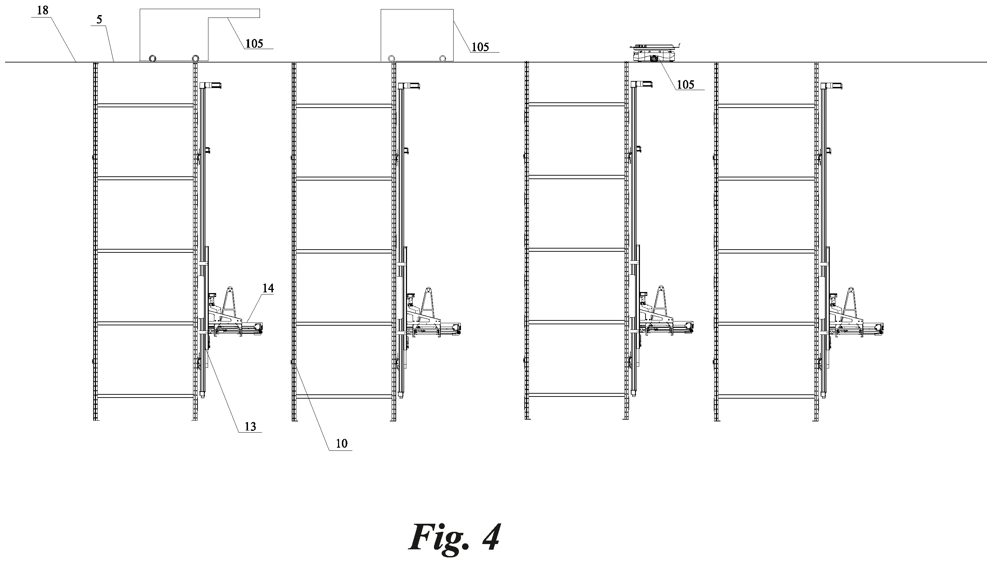

Referring to FIG. 4, an opening 5 is provided at the top of the stereoscopic warehouse, and the shape of the opening 5 matches the task module 14.

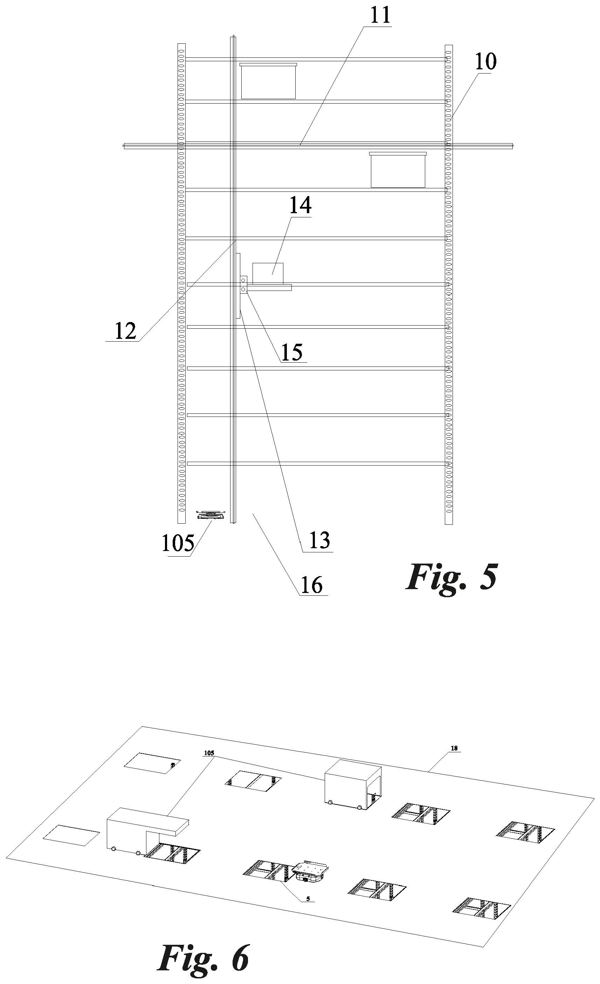

Referring to FIG. 5, for clarity of description and sufficiency of disclosure, the present disclosure refers to FIG. 5 to explain the structure of the track transport device in the transport system. However, it should be noted that in different transport systems, different transmission devices can be adapted to complete the technical solutions of FIGS. 3-4. Therefore, the transmission device disclosed in the present disclosure cannot limit the scope of the present disclosure. As an example, the track transport device disclosed in the present disclosure includes: a transverse track 11, a first upright 12, a first movable member 13, and a connecting mechanism of a task module 14.

The transverse track 11 is disposed on the rack 10.

It should be noted that the transverse track 11 is located on a beam or an upright of the rack 10. When the length of the rack beam is long, the transverse track needs to rely on the beam and the upright of the single rack, and extend to the adjacent rack beam.

The first upright 12 is vertically disposed on the transverse track 11 and is capable of sliding transversely.

The transverse sliding of the upright 12 on the transverse track enables the first movable member 13 to be positioned at various columns of the warehouse rack.

The first movable member 13 is disposed on the first upright 12 and is capable of sliding along the first upright 12.

With the above arrangement, the first movable member 13 can move transversely and longitudinally, enabling the first movable member 13 to be positioned at various tiers of the rack.

A connecting mechanism 15 of the task module 14 is disposed on the first movable member 13.

The task module 14, driven by the first movable member 13, stores and/or retrieves bin(s) and/or goods, and places them into a docking assembly of a freight robot 105 running at the bottom 16 and/or top of the warehouse rack, or retrieves them from the docking assembly.

The task module 14 can be a component capable of performing one or more tasks such as identification, extraction, returning, and grabbing. The task module 14 is positioned to a slot of the rack under the drive of the first movable member 13. At the same time, the connecting mechanism of the task module is a basic structure capable of realizing connection with different task modules.

When the task module is a bin store/retrieve module, it includes a support structure of the bin store/retrieve module, such as a loading/unloading frame; and a transmission assembly of the bin store/retrieve module, such as a transmission belt. Of course, the transmission belt needs to be driven by a transmission motor.

However, if it is another task module, the connector is set according to the specific function of the task module, which is not limited thereto. When performing a sorting action, a storage action, or a retrieval action, the task module, through the docking of the freight robot 105, can transfer, sort, and deliver goods to a destination slot, a sorting location, or even a transport location where the sorting has been completed.

A space capable of providing a passage for the freight robot to travel is provided below the rack.

The partition plates of the bottom tier of the warehouse rack are removed to provide a matching height to support the autonomous guided vehicle running on the ground and completing docking operations. In addition, the bottom partition plates between adjacent uprights of the warehouse rack are removed to form a docking position 25 for the autonomous guided vehicle.

The task module of the track transport device can extend out from the top of the stereoscopic warehouse.

Referring to FIG. 6, an opening is provided at the top of the stereoscopic warehouse, and the shape of the opening matches the task module, so as to enable the task module to extend out for a fulfillment docking operation. The task module stores and/or retrieves goods under the drive of the first movable member 13 and places them into the docking assembly of the freight robot 105 running at the top 18 of the rack 10 through the opening.

The warehouse rack, the rack track machine, and the autonomous guided vehicle constitute a flying bin system. The flying bin system aims at large-wave transmission demands in a stereoscopic warehouse environment. In the system, the track machine is mounted on an existing warehouse rack system and cooperates with freight robots walking on the ground or at the top. The system is capable of accurately positioning racks and bins, and completing pulling, putting back, accurate identification, and precise sorting of bins with the help of different task modules. Under the control of servers and execution logic for goods storage, retrieval, and sorting operations, it subverts the current goods flow and sorting in traditional warehousing and brings an experience of excellent fluency and extremely high efficiency.

Thus, in this embodiment, the transport system is provided with a track transport device and transverse tracks for the movement of uprights. Through the configuration of the warehouse racks and the modification of the top and bottom rack tiers of the stereoscopic warehouse, a travel passage is provided for freight robots or sorting robots, fundamentally solving the problem of waste in existing stereoscopic warehousing systems. By cooperating warehouse goods/bins with freight robots or sorting robots, it makes it possible to complete goods storage, goods/bin transfer, and goods/bin sorting in the stereoscopic warehouse. This achieves a significant improvement in the utilization rate of existing intelligent stereoscopic warehouses and the speed of goods inbound and outbound, as well as sorting efficiency.

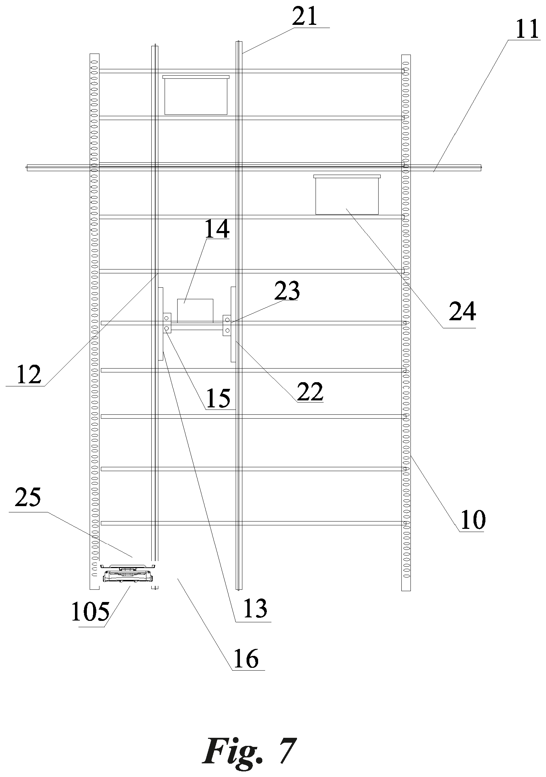

Referring to FIG. 7, a warehouse rack track transport device is shown, including the following.

Based on the illustration and description of FIG. 6, the transmission device further includes: a second upright 21 and a second movable member 22. The second upright 21 is vertically disposed on the transverse track 11 and is capable of sliding transversely.

The second movable member 22 is disposed on the second upright 21 and is capable of sliding along the second upright.

A connecting mechanism 23 of the task module 14 is disposed on the second movable member 22.

The task module 14 is disposed between the first upright 12 and the second upright 21 through the connecting mechanism 23.

The first movable member 13 and the second movable member 22 drive the task module 14 to be positioned at a goods position 24 or the docking position 25 on the rack 10.

The docking position 25 is a position where the task module 14 transfers goods to the freight robot after storing and/or retrieving the bin and/or goods from the slot of the rack.

The partition plates of the bottom tier of the warehouse rack are removed to provide a matching height to support the autonomous guided vehicle running on the ground and completing docking operations. Moreover, the bottom partition plates between adjacent uprights of the warehouse rack are removed to form the docking position 25 for the autonomous guided vehicle.

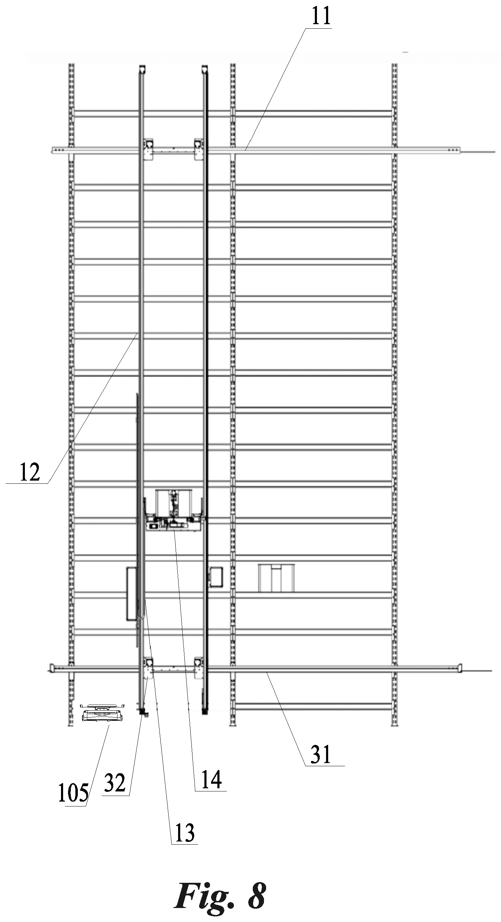

Referring to FIG. 8, a warehouse rack track transport device is shown. Based on the illustration and corresponding description of FIG. 1 and FIG. 2, in FIG. 8, there is another transverse track 31 located at the lower portion of the rack 10. Both the transverse track 11 and the other transverse track 31 can be connected to the first upright 12 and the second upright 21 through sliders.

The slider moves on the transverse track driven by rollers, and the rollers are driven by a motor.

It should be noted that the roller is a preferred solution. In practice, gears, or a combination of gears and rollers, are used to realize the movement of the upright on the beam. Then, when using a gear as the transmission method, it needs to cooperate with a gear chain to complete the movement. The specific method can refer to the prior art. Moreover, in the case of a combination of gears and rollers, the gear meshes with the gear chain for transmission, driving the roller to move, thereby realizing the movement of the upright on the beam. Furthermore, the method of driving the rollers by the motor to make the components run can be realized by wired means (cables, flexible conductive materials, wear-resistant wires) or by wireless means, such as supporting operation after charging by lithium batteries, etc. The specific method is not limited.

In this embodiment, for large-scale rack systems, a more stable track transport device is required. Therefore, upper and lower transverse tracks are provided on the track assembly to fully support the first upright 12 and the second upright 21, so that tasks such as retrieval and return of bins/goods, docking, and sorting can be carried out reliably.

It should be noted that in the embodiments related to FIGS. 6-8, the freight robot is a freight robot running on the bottom ground or top of the warehouse rack. As an achievable embodiment, the freight robot can be an AGV, that is, an automated guided vehicle, usually also referred to as an AGV cart; or an AMR, that is, an autonomous mobile robot. The specific form is not limited, and reference may be made to the illustration in FIG. 2.

A freight robot and/or a load handling device is provided at the top of the stereoscopic warehouse. The load handling device is arranged in cooperation with a lifting device. The lifting device grabs the bin or goods. The load handling device is arranged to move on the top of the stereoscopic warehouse and is configured to lift and move the bin or goods in the stereoscopic warehouse. The load handling device includes:
- electrical control equipment, a drive and/or a lifting assembly, and
- a receiving space assembly for accommodating the bin or goods.

The lifting assembly is configured to lift and lower the lifting device relative to the receiving space assembly.

A walking face for autonomous guided vehicle (AGV) can be deployed at the top of the stereoscopic warehouse, and/or a first set of parallel tracks and a second set of parallel tracks are arranged. The second set of parallel tracks extend transversely to the first set on a substantially horizontal plane, forming a grid structure containing multiple grid spaces.

In addition, the freight robot is a warehouse robot, including: a mobile base, a vertical frame vertically disposed on the mobile base, and a store/retrieve device disposed on the vertical frame and capable of vertical lifting, that is, a movable cargo robot with a high vertical frame.

Optionally, the autonomous guided vehicle performs path planning under the control of a server or performs autonomous path planning by the autonomous guided vehicle, and is provided with a planar movement assembly and a docking assembly supporting bin storage/retrieval and/or placement. To improve transportation efficiency, the autonomous guided vehicle can run directly on the ground where the warehouse racks are located and can cooperate with the warehouse rack by removing the bottom partition plates. The task module is driven by the movable member to store and/or retrieve the required bin and/or goods and place them onto the docking assembly of the freight robot. The autonomous guided vehicle can be a freight robot or a sorting robot. The above cooperation makes it possible to complete goods storage, bin/goods transfer, and bin/goods sorting in the reservation unit.

As an achievable method, based on similar principles, the operation of the movable member on the slide track of the upright can be shown through the following figures. More specific electrical control methods are not limited and are not specifically shown.

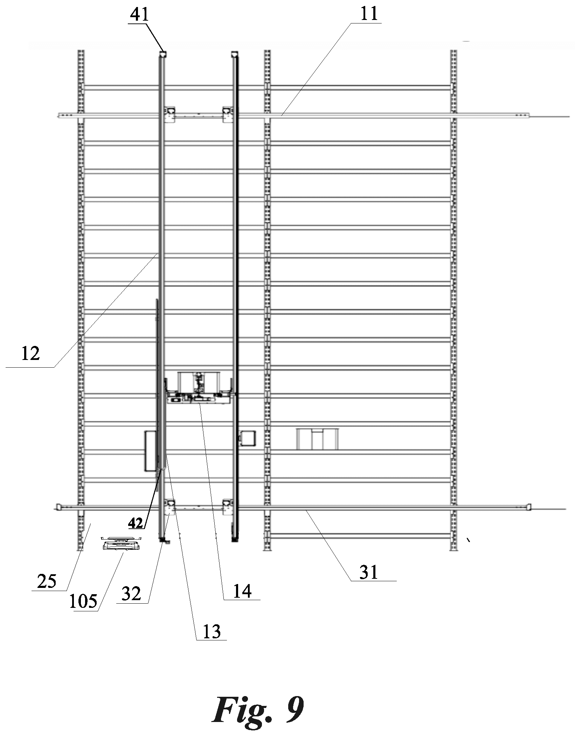

Referring to FIG. 9, a synchronous belt wheel, driven by a motor 41 and controlled via a reducer, drives a synchronous belt 42 to support the movement of the first movable member on the slide track of the first upright.

The synchronous belt, wheel driven by the motor and controlled via the reducer, drives the synchronous belt to support the movement of the second movable member on the slide track of the second upright.

The above arrangement can not only accurately position the relative position between the task module and the bin but also achieve a significant improvement in the reservation unit utilization rate of existing warehousing systems and the speed of goods inbound and outbound, as well as sorting efficiency.

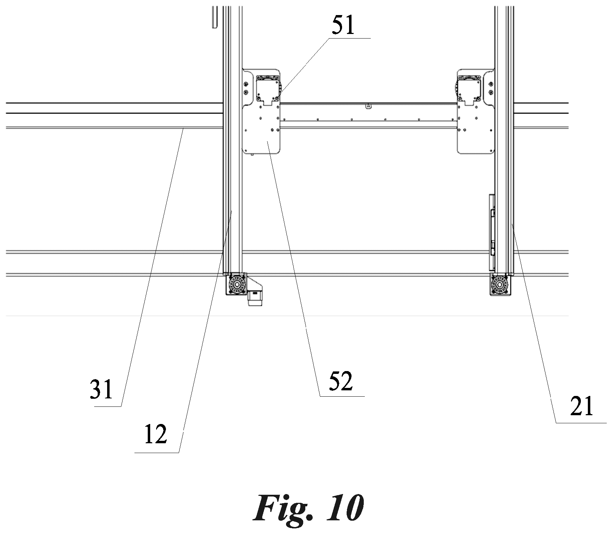

Referring to FIG. 10, a partial view of a warehouse rack track transport device is shown, including the following.

In this embodiment, FIG. 9 shows the connection structure between the transverse track 11 and the first upright 12 and the second upright 21. Referring to FIG. 10, the first upright 12 and the second upright 21 can be realized by a slider 52 driven by a roller 51 to slide on the transverse track 31. The first upright 12 and the second upright 21 are both socketed onto the slider 52, and the roller 51 contact the transverse track 31 to realize smooth movement.

The above arrangement can be one implementation method and is not limited thereto.

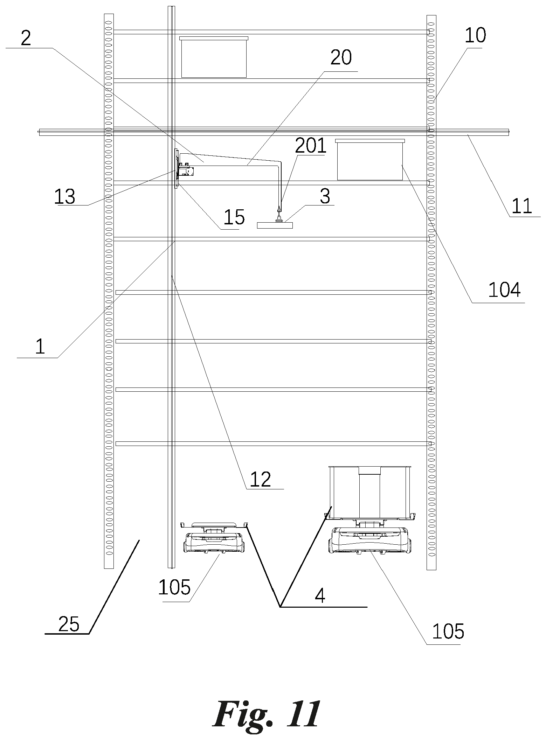

Referring to FIG. 11, a goods picking device 1 is installed on the rack. The goods picking device 1 drives a first task module 2 to place goods 3 into a docking assembly or docking bin 4 of a freight robot 105 running at the bottom of the rack 10 or retrieve them from the docking assembly or docking bin 4 and place them into the bin 104. The first task module 2 includes at least: a first movable member 13 and a picking mechanism 20.

The arrangement of the goods picking device 1 on the rack 10 is specifically realized as:
- including a transverse track 11, a first upright 12, a first movable member 13, and a connecting mechanism of the first task module 2; and
- the transverse track 11 is disposed on the rack 10.

It should be noted that the transverse track 11 is located on the beam or the upright of the rack 10. When the rack is transversely long, the transverse track needs to rely on the beam and upright of the single rack and extend to the adjacent rack beam.

The first upright 12 is vertically disposed on the transverse track 11 and is capable of sliding transversely.

The upright 12 slides along the transverse track 11, enabling the first movable member 13 to be positioned at various columns of the rack.

The first movable member 13 is disposed on the first upright 12 and is capable of sliding along the first upright 12.

With the above arrangement, the first movable member 13 can move transversely and longitudinally, enabling the first movable member 13 to be positioned at various tiers of the rack.

A connecting mechanism 15 of the first task module 2 is disposed on the first movable member 13.

The first task module 2, driven by the first movable member 13, uses the picking mechanism to store and/or retrieve goods 3 and place them into the docking assembly or docking bin of the freight robot 105 running at the bottom of the rack.

It should be particularly noted that in the solution of the present disclosure, the bottom partition plates of the warehouse rack are removed. Here, the partition plates represent components that provide slot support for different types of warehouse racks and surrounding components that provide stability to the beams. Removing the partition plates to provide a matching height actually requires removing surrounding components that block the freight robot from running on the ground. The partition plates are not limited to the material and style set in the warehouse rack. This supports the freight robot to run on the ground and complete docking operations. Removing the bottom partition plates between adjacent uprights of the warehouse rack forms the docking position 25 for the freight robot. It should be additionally noted that the bottom partition plate of the rack includes the partition plate itself and the beams, thereby being able to provide activity space for the freight robot.

More specifically, the picking mechanism includes a suction mechanism 201 and/or a picking mechanism. The suction mechanism 201 and/or the picking mechanism (not shown) can be connected to the first movable member 13 through the connecting mechanism 15 of the first task module, that is, an extension member of the suction mechanism 201 and/or the picking mechanism. The extension member can be a multi-segment mechanical arm with degrees of freedom. The suction mechanism 201 can form contact with the goods through the generated suction force and maintain the contact until the goods 3 are placed into the docking assembly or docking bin of the freight robot running at the bottom of the rack or retrieved from the docking assembly and placed into the bin.

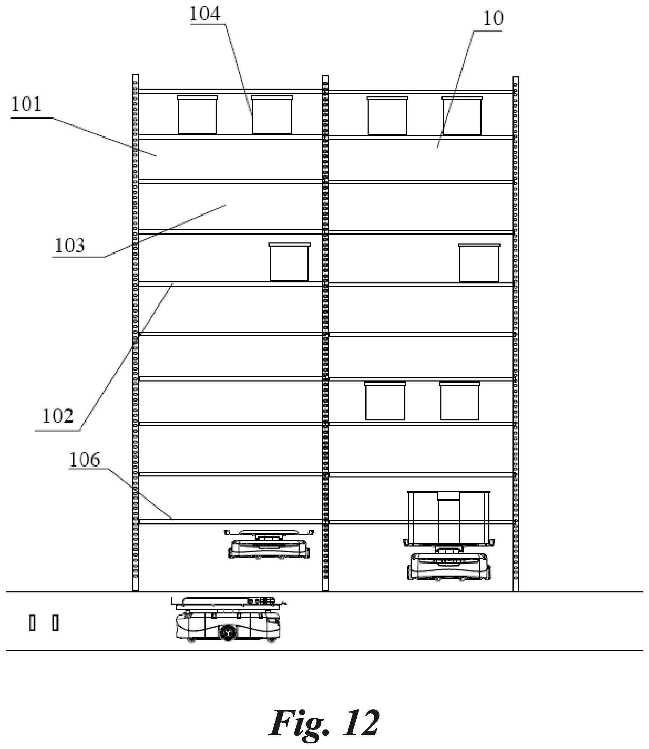

Referring to FIG. 12, in this embodiment, when performing the goods sorting action, the goods storage action, or the goods retrieval action through the docking of the freight robot 105, the goods can be transferred, sorted, and delivered to a destination slot, a sorting location, or a transport location where the sorting has been completed.

The rack removes the partition plates 102 of one or more slots on the bottom rack tier to provide a passage for the freight robot 105.

The rack removes one or more rack tiers 106 to provide a matching height to support the freight robot 105 running on the ground.

In FIG. 12, an aisle for the freight robot 105 to travel on the ground between two racks is also shown.

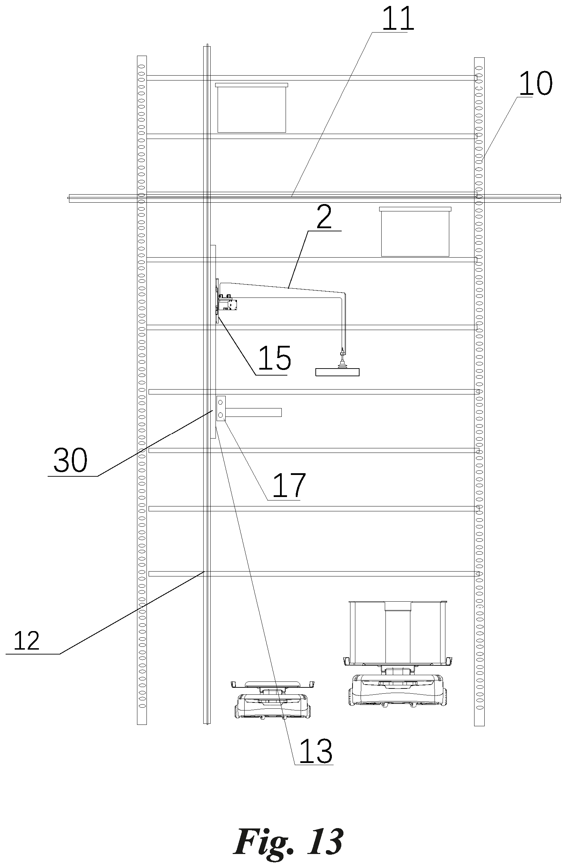

Referring to the situation in FIG. 13, when the first task module 2 and/or the second task module 14 are both mounted on the first transverse track, the first upright, and the first movable member, the connecting mechanism of the first task module and the connecting mechanism of the second task module can be integrally arranged to drive the first task module to sort goods and drive the second task module to store bins.

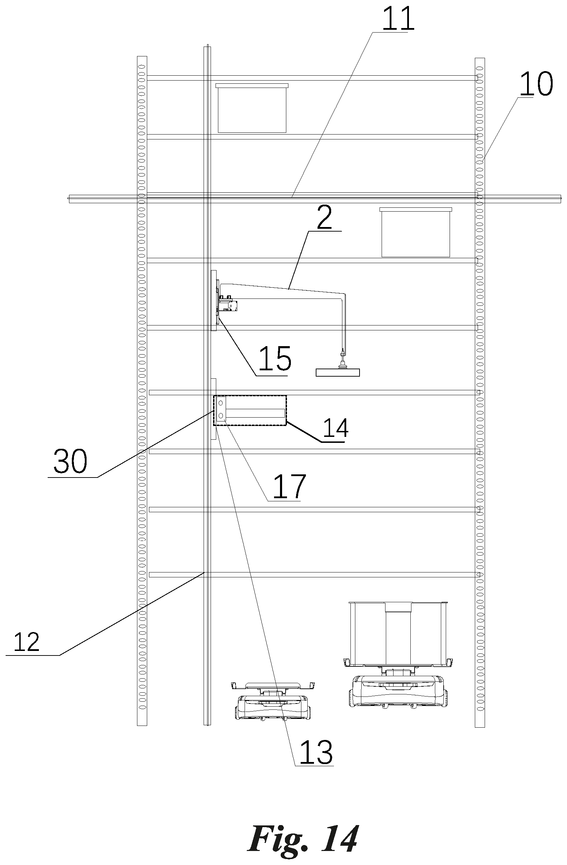

Referring to FIG. 14, in another case, when the first task module and/or the second task module are both mounted on the first transverse track, the first upright, and the first movable member, the connecting mechanism of the first task module and the connecting mechanism of the second task module are separately arranged and cooperate according to the current task.

When the task module is a bin store/retrieve module, it at least includes:
- a support structure of the bin store/retrieve module, such as a loading/unloading frame; and
- a transmission assembly of the bin store/retrieve module, such as a transmission belt.

Of course, the transmission belt needs to be driven by a transmission motor.

The track transport device pulls out the target bin at the target slot of the target rack using the bin store/retrieve module. The picking mechanism of the goods picking device system picks the target goods in the target bin, so as to realize that the goods picking device drives the first task module to place goods into the docking assembly or docking bin of the freight robot running at the bottom of the rack.

Alternatively, the picking mechanism of the goods picking device system retrieves the target goods from the docking assembly or docking bin of the freight robot. The track transport device pulls out the target bin at the target slot of the target rack using the bin store/retrieve module. The picking mechanism places the target goods into the target bin.

The bin store/retrieve module pushes the target bin back.

It should be particularly noted here that the store/retrieve module of the bin store/retrieve task module 14 can realize storage operations and or/ retrieval operations for bins that are densely arranged in positions adjacent or linked in the stereoscopic warehouse. For example, in the depth direction (Y-axis), the store/retrieve arm of the bin store/retrieve task module is used to store and/or retrieve a certain bin among multiple bins.

In practical application, however, as mentioned above, the connecting mechanism of the task module is a basic structure capable of realizing connection with different task modules. If it is another task module, the connector is set according to the specific function of the task module, which is not limited thereto.

It should be particularly noted that in this embodiment, through the modification of the configuration of the bottom rack tier of the rack, and the cooperation of the goods picking device 1, the freight robot 105, or the sorting robot (not shown), the problem of low efficiency of goods/bin transfer and sorting in existing rack storage is fundamentally solved. Moreover, it expands the application scenarios of the racks, making it possible to complete goods storage, goods/bin transfer, and goods/bin sorting within the reservation unit, thereby achieving a significant improvement in the reservation unit utilization rate of the existing rack transport system and the speed of goods inbound and outbound, as well as sorting efficiency.

For sufficiency of disclosure, the freight robot can be selected from freight robots or sorting robots in published texts. The freight robot performs path planning under the control of a server, or performs autonomous path planning by the freight robot, and is provided with a planar movement assembly and a docking assembly supporting bin storage/retrieval operations and bin placement. To improve transportation efficiency, the freight robot can run directly on the ground directly below the rack and cooperate with the rack by removing the bottom partition plates. The goods are driven by the movable member of the task module and placed onto the docking assembly of the freight robot. The freight robot can be an autonomous guided vehicle, a freight robot with a bracket or a telescopic bracket, or a sorting robot. The above cooperation enables goods storage, goods/bin transfer, and goods/bin sorting to be completed within the reservation unit.

The above arrangements can all be used as disclosures in the present disclosure, which can not only accurately position the relative position between the task module and the bin but also achieve a significant improvement in the reservation unit utilization rate of the existing transport system and the speed of goods inbound and outbound, as well as sorting efficiency.

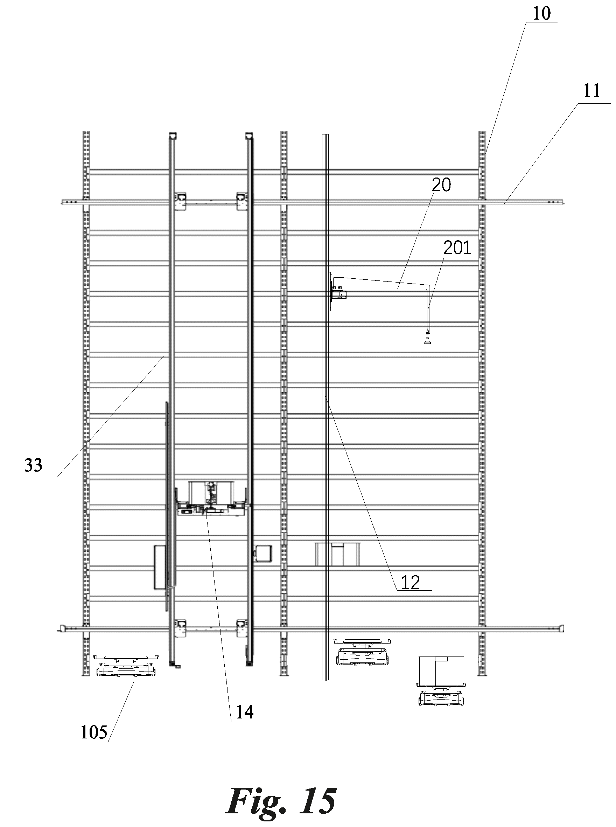

Referring to FIG. 15, a transport system is shown. The arrangement of the track transport device on the rack further includes a third upright 33. The second task module 14 is disposed between the second upright 21 and the third upright 33 through a connecting mechanism, and the second task module 14 is driven to be positioned at a goods position or a docking position on the rack 10.

In this embodiment, the track transport device and the goods picking device are respectively disposed on different uprights. In large-scale dense storage scenarios, such as warehouses storing more than 100,000 bins with a flow rate of 5,000 bins/hour, multiple track transport devices and goods picking devices can be respectively installed on the same rack to cooperate with large-flow order demands. When the track transport device and the goods picking device system work together, taking order outbound as an example, if goods X of an order A or a stock keeping unit (SKU) needs to be outbound, the track transport device pulls out the target bin at the target slot of the target rack using the second task module, i.e., the bin store/retrieve module, so that the goods X can be sucked by the suction mechanism 201 and/or the picking mechanism of the goods picking device system. Before suction, an identification module is required to identify the goods X or the certain SKU. The identification module can be disposed on the goods picking device and/or the track transport device. The identification module can be a monocular camera, a laser camera, or a depth camera.

After the above picking process is completed, using the accurate positioning of the identification module, the goods picking device is used to place the goods X or the certain SKU indicated by the order onto the docking position of the freight robot. The freight robot will travel to the next docking position or workstation.

In another embodiment, one or more racks are included, and the structure and working principle of the racks refer to FIGS. 11-15. The racks can be configured with in-library picking devices and/or track transport devices. During operation, they are installed on one or more racks. The fulfillment operating faces of the warehouse racks are all provided with the track transport device, including but not limited to the aisle direction, and even the scenario of setting racks perpendicular to the aisle.

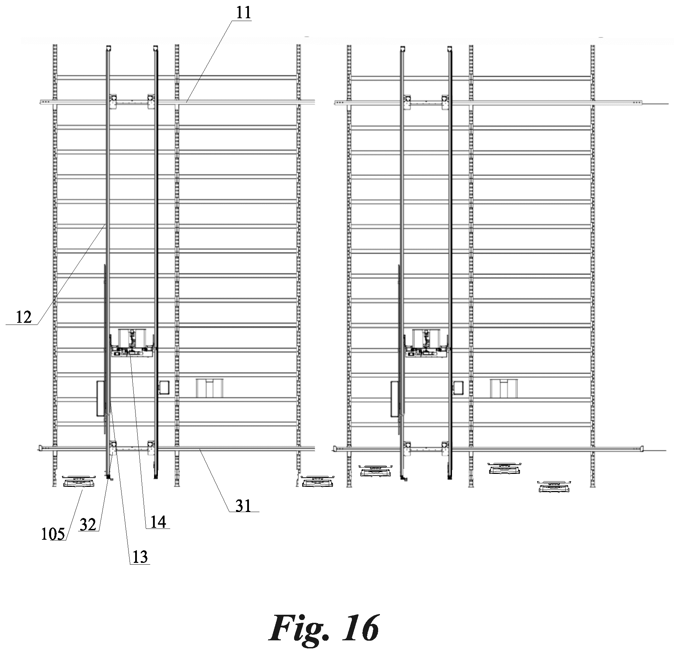

It can support independent operation under the control of control chips and software instructions or coordinated operation with warehouse management software built into the server side. At the same time, the one or more racks can be ordinary racks or precision racks, and the rack height and ground flatness are not limited. In addition, the present disclosure also discloses a transport system, which is configured as the transport system of FIG. 16 and multiple freight robots 105. On the basis of this setting, the efficiency of goods storage and retrieval, transportation, and sorting can be further improved, adapting to the technical requirements of rapid transfer and transport in various storage scenarios.

Finally, it should be noted that: the various embodiments in this specification are described in a progressive manner, each embodiment focuses on explaining the differences from other embodiments, and the same or similar parts among the various embodiments can be referred to each other. The above embodiments in this specification are only used to explain the technical solutions of the present disclosure, not to limit them. Although the present disclosure has been described in detail with reference to the foregoing embodiments, those of ordinary skill in the art should understand that they can still modify the technical solutions recorded in the foregoing embodiments, or perform equivalent replacements for some or all of the technical features; and these modifications or replacements do not make the essence of the corresponding technical solutions depart from the scope of the technical solutions of the various embodiments of the present disclosure.

### Industrial Applicability

Adopting the above solution, warehouse racks can be set in various warehouses. The transport system is provided with a track transport device and transverse tracks for the movement of uprights. Through the configuration of the warehouse racks and the modification of the top and bottom rack tiers of the stereoscopic warehouse, a travel passage is provided for freight robots or sorting robots, fundamentally solving the problem of waste in existing stereoscopic warehousing systems. At the same time, the bins in the warehouse are stored and/or retrieved under the drive of the first movable member and placed onto the docking assembly of the freight robot running at the top or bottom of the warehouse rack, which can cooperate the warehouse goods/bins with the freight robot or sorting robot, making it possible to complete goods storage, goods/bin transfer, and goods/bin sorting in the stereoscopic warehouse. This achieves a significant improvement in the utilization rate of existing intelligent stereoscopic warehouses, the speed of goods inbound and outbound, and the sorting efficiency, and effectively reduces deployment costs, thus improving the practicality.

## Claims

1. A warehouse-based transport system, applied to a stereoscopic warehouse, wherein the stereoscopic warehouse is provided with warehouse racks having multiple columns and tiers, the warehouse racks are provided with multiple tiers of reservation units, and bins are placed in slots of the reservation units; a track transport device is mounted on the warehouse racks, the device comprising:
a transverse track, a first upright, a first movable member, and a connecting mechanism of a task module, wherein
the transverse track is disposed on the rack;
the first upright is vertically disposed on the transverse track and is capable of sliding transversely;
the first movable member is disposed on the first upright and is capable of sliding along the first upright;
the connecting mechanism of the task module is disposed on the first movable member;
the task module, driven by the first movable member, stores and/or retrieves bins and/or goods, and places the bins and/or goods into a docking assembly of a freight robot running at a bottom and/or a top of the warehouse rack, or retrieves the bins and/or goods from the docking assembly;
a space capable of providing a passage for a freight robot to travel is provided below the rack; and
the task module of the track transport device is capable of extending out from the top of the stereoscopic warehouse.

2. The warehouse-based transport system according to claim 1, wherein the track transport device is provided on a fulfillment operating face of the warehouse racks.

3. The warehouse-based transport system according to claim 1, wherein the space, capable of providing the passage for the freight robot to travel and arranged below the rack, is specifically implemented as:
removing partition plates of one or more slots on a bottom rack tier of the rack to provide a passage for the freight robot; or
removing one or more rack tiers of the rack to provide a matching height to support the freight robot running on the ground.

4. The warehouse-based transport system according to claim 1 or 2, wherein an opening is provided at the top of the stereoscopic warehouse, and a shape of the opening matches the task module to allow the task module to extend out to perform a fulfillment docking operation.

5. The warehouse-based transport system according to claim 3, wherein the stereoscopic warehouse is arranged in a detachable manner or is a mobile stereoscopic warehouse.

6. The warehouse-based transport system according to claim 3, wherein the opening provided at the top of the stereoscopic warehouse is specifically implemented as: the task module extends through the opening provided at the top of the stereoscopic warehouse, stores and/or retrieves the bins under the drive of the first movable member, and places the bins into a docking assembly of a freight robot running at the top of the warehouse rack at the opening.

7. The warehouse-based transport system according to claim 1, wherein the goods are placed into the docking assembly or a docking bin of the freight robot running at the bottom of the rack by a goods picking device, or retrieved from the docking assembly or the docking bin and placed into the bin; the goods picking device on the rack is specifically implemented as:
a first transverse track, a first upright, a first movable member, and a connecting mechanism of a first task module, wherein
the first transverse track is disposed on the rack;
the first upright is vertically disposed on the first transverse track and is capable of sliding transversely;
the first movable member is disposed on the first upright and is capable of sliding along the first upright; and
the connecting mechanism of the first task module is disposed on the first movable member.

8. The warehouse-based transport system according to claim 6 or 7, further comprising: a second transverse track, and the second transverse track is located at a lower portion of the rack, wherein the first transverse track and the second transverse track are connected to the first upright via a slider; and
the slider moves on the transverse tracks driven by rollers and/or gears, wherein the rollers and/or gears are driven by a motor.

9. The warehouse-based transport system according to claim 8, wherein an arrangement of the track transport device on the rack further comprises: a second upright and a second movable member, wherein the second upright is vertically disposed on the transverse track and is capable of sliding transversely;
the second movable member is disposed on the second upright and is capable of sliding along the second upright; and
a connecting mechanism of a second task module is disposed on the second movable member.

10. The warehouse-based transport system according to claim 9, wherein the arrangement of the track transport device on the rack further comprises a third upright, wherein the second task module is disposed between the second upright and the third upright via the connecting mechanism; and
the second task module is driven to be positioned at a goods position or a docking position on the rack.

11. The warehouse-based transport system according to claim 9, wherein
a synchronous belt wheel, driven by a motor and controlled by a reducer, drives a synchronous belt to support a movement of the first movable member on a slide track of the first upright; and
the synchronous belt wheel, driven by the motor and controlled by the reducer, drives the synchronous belt to support the movement of the second movable member on the slide track of the second upright.

12. The warehouse-based transport system according to claim 7, further comprising an identification module, wherein the identification module is disposed on the goods picking device and/or the track transport device.

13. The warehouse-based transport system according to claim 1, wherein the freight robot is an autonomous mobile robot and/or a load handling device.

14. The warehouse-based transport system according to claim 1 or 13, wherein the autonomous mobile robot and/or the load handling device is provided at the top of the stereoscopic warehouse, the load handling device is arranged in cooperation with a lifting device, the lifting device grabs the bin or goods, the load handling device is arranged to move on the top of the stereoscopic warehouse and is configured to lift and move the bin or the goods in the stereoscopic warehouse, and the load handling device comprises:
electrical control equipment, a drive and/or a lifting assembly,
a receiving space assembly for accommodating the bin or goods; and
the lifting assembly is configured to lift and lower the lifting device relative to the receiving space assembly.

15. The warehouse-based transport system according to claim 1 or 14, wherein a walking face for an autonomous guided vehicle (AGV) is able to be deployed at the top of the stereoscopic warehouse, and/or, a first set of parallel tracks and a second set of parallel tracks are arranged, wherein the second set of parallel tracks extends transversely to the first set on a substantially horizontal plane, forming a grid structure comprising multiple grid spaces.

16. The warehouse-based transport system according to any one of claims 1-6, wherein the task module is a component capable of performing one or more tasks such as identification, extraction, returning, and grabbing; and the connecting mechanism of the task module is connected to different task modules.

17. The warehouse-based transport system according to any one of claims 1-16, wherein the freight robot is a warehouse robot, comprising: a mobile base, a vertical frame vertically disposed on the mobile base, and a store/retrieve device disposed on the vertical frame and capable of vertical lifting.

18. The warehouse-based transport system according to claim 10, wherein the docking position is a position where the second task module transfers goods to the freight robot after storing and/or retrieving the bin and/or goods from the slot of the rack.

19. An intelligent stereoscopic warehousing system, comprising one or more transport systems according to any one of claims 1-18.
